# FASCICULE DE BREVET EUROPEEN

(11) **EP 2 388 105 B1**
(45) Date de publication et mention de la délivrance du brevet: **05.12.2012**
(21) Numéro de dépôt: 10163607.4
(22) Date de dépôt: 21.05.2010
(51) Int. Cl.: B23Q 11/10, B23Q 37/00, B23Q 39/04

(54) **Regroupage et intégration des périphériques dans un sous-système d'un tour multibroches**
Gruppierung und Integration von Peripheriegeräten in einem Untersystem einer Mehrspindel-Drehmaschine
Regrouping and integration of peripherals in a subsystem of a multiple-spindle lathe

(43) Date de publication de la demande: 23.11.2011
(73) Titulaire: Tornos SA, 2740 Moutier (CH)
(72) Inventeur: Chardonnereau, André, 6045, Meggen (CH); Vettori, Marco, 2732, Loveresse (CH)
(74) Mandataire: BOVARD AG

(56) Documents cités:
- FR-A1- 2 467 055
- GB-A- 2 092 046
- US-A1- 2005 150 635

## Description

L'invention se rapporte à un procédé de regroupage des périphériques pour un tour multibroches. L'invention se rapporte également à un sous-système comprenant ces périphériques.

### DESCRIPTION DE L'ART ANTERIEUR

Les tours multibroches nécessitent normalement pour usiner une pièce, généralement sous forme d'une barre ou de lopins, un équipement composé de différents périphériques qui proviennent de fournisseurs différents et qui viennent s'ajouter à la machine de base de manière plus ou moins intégrées. Ces périphériques sont, entre autres :
- bac d'arrosage avec ses pompes ;
- bac additionnel pour haute pression ;
- bac additionnel pour systèmes hydrostatiques ;
- systèmes de filtration des liquides de coupe ;
- système de refroidissement des liquides de coupe ; et
- système de ravitaillement matière.

L'équipement est dans la plupart des cas composé d'une combinaison d'une partie des périphériques évoqués, optimisée selon le besoin spécifique du client.

De part le savoir-faire spécifique nécessaire et les coûts d'une solution interne, les constructeurs de machines-outils en général et donc aussi ceux de tours multibroches préfèrent aujourd'hui acheter ces périphériques chez des fournisseurs spécialisés dans leur domaine.

Ces périphériques sont généralement achetés individuellement et puis connectés au tour multibroche. Le fabricant de ces périphériques vérifie individuellement le fonctionnement des périphériques fabriqués par calui-ci. En revanche, il est difficile de vérifier l'interopérabilité de tous ces périphériques ensemble.

Lié aussi au fait que ces périphériques viennent de différents fabricants et sont branchés individuellement au tour multibroches, il est difficile d'implémenter un contrôle centralisé de ces périphériques. De plus, ces périphériques sont généralement assez grands, ce qui signifie que ces périphériques prennent beaucoup de place au sol.

Dans le cas particulier d'un même fournisseur livrant plusieurs périphériques, on connait des cas de regroupement de certains éléments, mais le plus souvent celui-ci ne concernait que les bacs, pompes standards et pompes haute pression.

Le transport, la mise en place, l'alignement, le raccordement et la mise en route de ces différents périphériques sont coûteux et demandent un temps important dans l'usine du fabricant de la machine lors de la mise en service et des tests qualités effectués avant la livraison. Le client a les mêmes inconvénients lors de l'installation de la machine dans ces locaux, car les mêmes opérations doivent être refaites complètement étant donné que le démontage complet est nécessaire lors du transport.

GB 2 092 046 divulgue un mécanisme d'entraînement pour un tour multibroche. Selon cet exemple, c'est la machine-outil elle-même qui comprend plusieurs éléments, tels qu'une pompe et des filtres, montés sur une base de cette machine-outil.

### RESUME DE L'INVENTION

L'objet de la présente invention est de surmonter les problèmes des solutions connues. La présente invention propose donc une solution de regroupage des périphériques pour un tour multibroches comme expliqué plus en détail plus loin.

A cet effet, l'invention a pour objet un procédé de regroupage et d'intégration des périphériques pour un tour multibroches selon la revendication 1.

La présente invention propose donc un concept « tout en un » propre et rationnel, où les différents périphériques sont regroupés dans un seul sous-système qui compose la partie arrière d'un tour multibroche. Ceci signifie aussi un gain de place. Le fait d'intégrer différents périphériques dans un seul sous-système garantit aussi la maîtrise plus aisée des composants internes. Par exemple, on peut avoir un coffret électrique décentralisé, intégré au sous-système qui, relié à la commande principale de la machine (tour multibroches), permet de tester les fonctionnalités de chacun des périphériques, ainsi que leur interdépendance.

Le sous-système, relié à un simulateur, en lieu et place de la commande machine, devient un module indépendant que l'on peut aisément tester et régler avant qu'il ne soit intégré à la machine.

De plus le sous-système devient un élément standard du tour multibroches que le fabricant peut proposer aux clients à un coût réduit par rapport à la situation où les périphériques sont achetés individuellement.

L'invention a également pour objet un sous-système pour un tour multibroches selon la revendication 9.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : en perspective, un système regroupant différents périphériques pour un tour multibroches selon un mode de réalisation de la présente invention, et
- figure 2 : vu depuis le côté, le système de la figure 1.

### DESCRIPTION DETAILLEE DES MODES DE REALISAT ON

En se reportant aux dessins, un mode de réalisation non limitatif d'un procédé de regroupement des périphériques pour un tour multibroche et un mode de réalisation non limitatif d'un sous-système regroupant différents périphériques conformément à la présente invention sont maintenant expliqués plus en détail.

La présente invention consiste à proposer un sous-système ou module intégré, qui regroupe dans une seule entité toutes ou la plupart des fonctions nécessaires au fonctionnement de la machine-outil. Cette entité est parfaitement adaptée et intégrée à la machine-outil.

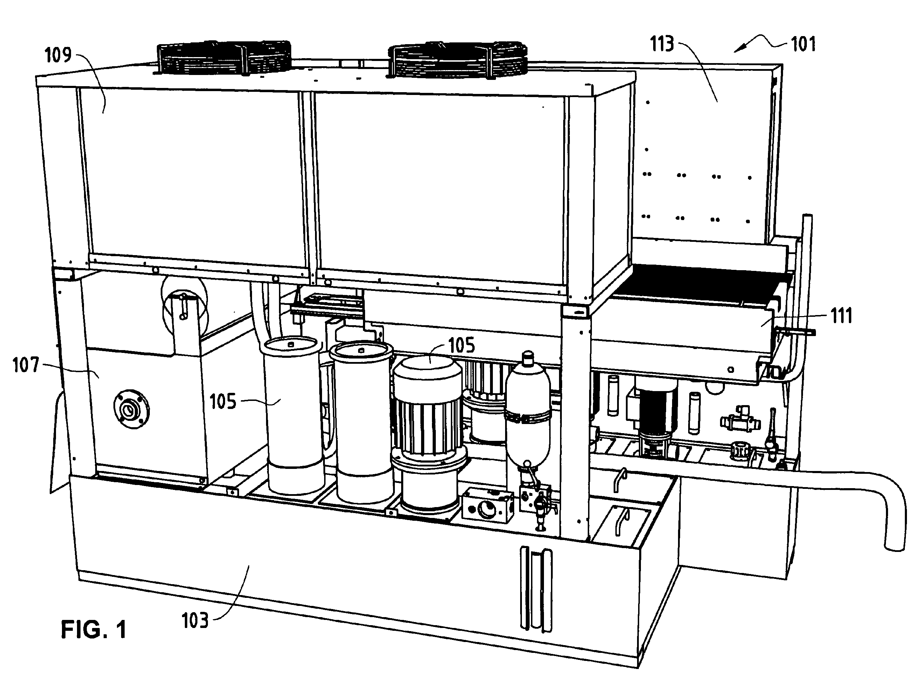

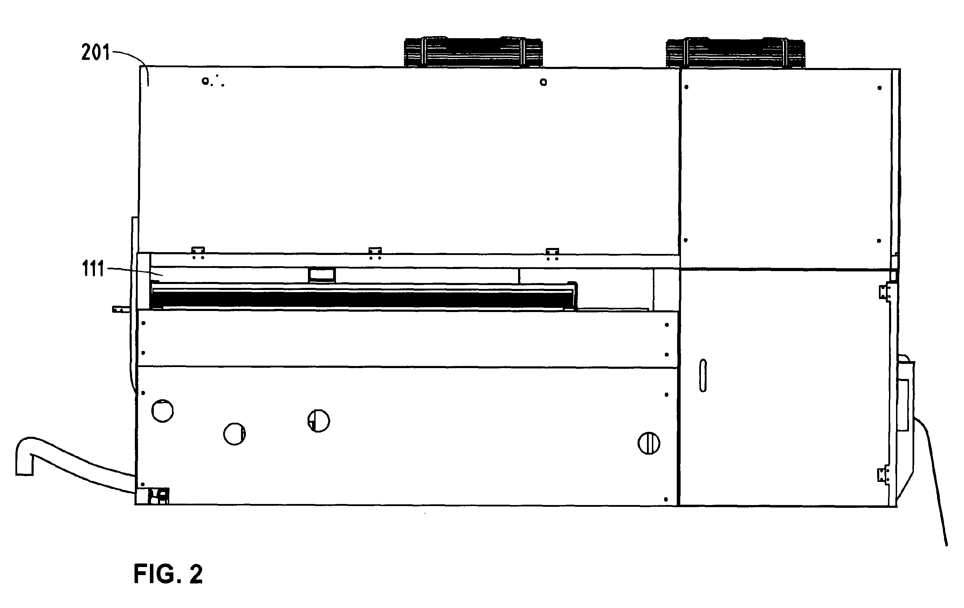

La figure 1 représente une vue en perspective d'un sous-système intégré 101 comprenant différents périphériques ou composants pour un tour ou une machine-outil multibroches. Sur cette figure, les panneaux de protection et/ou de fermeture ne sont pas représentés. Ils le sont par contre sur la figure 2 et forment un sous-ensemble 201. Les composants regroupés dans le système 101 constituent donc, avec les panneaux de fermeture, le sous-ensemble 201. Lesdits panneaux de fermeture ne sont pas forcément nécessaires mais ils participent au design extérieur de la machine complète. De ce fait, les composants internes peuvent être visibles.

La figure 1 illustre un seul sous-système 101 qui regroupe toutes les fonctions périphériques nécessaires au fonctionnement de la machine-outil. Tous les composants électriques nécessaires au fonctionnement des différents composants du système 101 sont présents dans celui-ci, hormis la commande principale, qui est installée sur la machine-outil.

En bas sur la figure 1 on voit un bac 103 intégré qui contient dans cet exemple un bac d'arrosage avec ses pompes 105, un bac pour haute pression et un bac pour systèmes hydrostatiques. Au milieu à gauche sur la figure 1 on voit également un système de filtration de l'huile 107. Plusieurs possibilités sont envisageables, tel qu'un filtre à papier, un filtre à tambour ; une crépine, une chaussette, etc.

En haut sur cette figure on voit un système de régulation de température 109. Ce système de régulation de température 109 peut être utilisé par exemple pour refroidir la température des liquides de coupes. Ce système peut donc être par exemple un refroidisseur ou un échangeur de chaleur. En bas du système de régulation de température 109 se trouve un système de ravitaillement 111 de la matière à usiner par la machine-outil.

Derrière le système de régulation de température 109 on voit un coffret de commande électrique décentralisé 113. Ce coffret 113 est agencé pour contrôler l'opération des périphériques individuels mais aussi l'interopérabilité d'un ensemble des périphériques.

Le sous-système ou module 101 peut également comprendre une alimentation électrique séparée du reste de la machine et couplage de tous ou certains des périphériques électriques à cette alimentation électrique.

Le procédé d'installation des périphériques ou le procédé de regroupement comprend, selon cet exemple, les étapes suivantes :
- obtention des périphériques individuels ;
- vérification individuellement du fonctionnement des périphériques ;
- montage des périphériques dans un module 101;
- vérification de l'interopérabilité des périphériques et du fonctionnement de l'ensemble des périphériques ;
- habillage du module 101 pour former le sous-ensemble 201 ; et
- rattachement du sous-ensemble 201 à une machine-outil multibroches.

L'étape du montage des périphériques dans le module 101 peut comprendre également une interconnexion de certains périphériques. La vérification individuelle du fonctionnement des périphériques est avantageusement effectuée avant le montage des périphériques dans le module 101. En ce qui concerne la vérification de l'interopérabilité des périphériques et le fonctionnement de l'ensemble des périphériques, cette opération peut être effectuée même avant d'intégrer le système à la machine-outil. Cette étape peut aussi être effectuée après avoir intégré le système à une machine-outil. Dans ce cas le système peut être désassemblé et le sous-ensemble 201 testé peut être transporté séparément du reste de la machine à sa destination finale.

On pourrait aussi envisager plusieurs variations dans la configuration expliquée ci-dessus sans sortir du cadre de la présente invention. Par exemple, le module 101 peut être proposé en différentes versions, telles que : une version à maintenance réduite, des versions pour différentes longueurs des barres, etc.

## Revendications

1. Un procédé de regroupage et d'intégration des périphériques pour un tour multibroches, le procédé comprend
• l'obtention des périphériques suivants :
• au moins un des bacs suivants : un bac d'arrosage (103), un bac pour haute pression (103), un bac pour systèmes hydrostatiques (103) ;
• un système de filtration des liquides (107) ;
• un système de régulation de la température des liquides (109) ; et
• un coffret électrique (113), et
• le montage de ces périphériques dans un sous-système,
**caractérisé par** l'intégration dans le sous-système
• d'un système de ravitaillement (111) de la matière à usiner ; et
• de tous les composants électriques nécessaires au fonctionnement des périphériques, hormis la commande principale,
dans lequel le sous-système (101) est agencé pour être intégré à un tour multibroches.

2. Le procédé selon la revendication 1, dans lequel le procédé comprend en plus la vérification individuelle du fonctionnement des périphériques avant l'intégration du sous-système (101) dans le tour multibroches.

3. Le procédé selon l'une quelconque des revendications précédentes, dans lequel le procédé comprend de plus l'interconnexion d'au moins certains périphériques.

4. Le procédé selon l'une quelconque des revendications précédentes, dans lequel le procédé comprend de plus la vérification de l'interopérabilité des périphériques.

5. Le procédé selon la revendication 4, dans lequel la vérification de l'interopérabilité des périphériques est effectuée avant l'intégration du sous-système (101) dans le tour multibroches.

6. Le procédé selon l'une quelconque des revendications précédentes, dans lequel le procédé comprend l'insertion d'une alimentation électrique du sous-système (101) séparée du reste du tour multibroches et couplage de tous ou certains des périphériques électriques à cette alimentation électrique.

7. Le procédé selon l'une quelconque des revendications précédentes, dans lequel le montage comprend tous les périphériques essentiels au fonctionnement du tour multibroches.

8. Le procédé selon l'une quelconque des revendications précédentes, dans lequel le procédé comprend en plus l'installation d'une unité de commande (113) dans le sous-système (101) pour commander l'opération d'au moins certains périphériques.

9. Un sous-système (101) pour un tour multibroches, le sous-système (101) comprend les périphériques suivants :
• au moins un des bacs suivants : un bac d'arrosage (103), un bac pour haute pression (103), un bac pour systèmes hydrostatiques (103) ;
• un système de filtration des liquides (107) ;
• un système de régulation de la température des liquides (109); et
• un coffret électrique (113),
**caractérisé en ce que** le sous-système (101) comprend en plus un système de ravitaillement (111) de la matière à usiner et tous les composants électriques nécessaires au fonctionnement des périphériques, hormis la commande principale, et dans lequel le sous-système (101) est agencé pour être intégré à un tour multibroches.

10. Le sous-système (101) selon la revendication 9, dans lequel le coffret électrique (113) est agencé pour contrôler l'interopérabilité d'au moins certains périphériques électriques du sous-système (101).

11. Le sous-système (101) selon l'une quelconque des revendications 9 ou 10, dans lequel le sous-système est agencé pour être transporté comme une unité indépendante du tour multibroches.

## Claims

1. A method of regrouping and integration of peripherals for a multispindle lathe, the method comprising
• providing the following peripherals:
• at least one of the following tanks: a lubrication tank (103), a tank for high pressure (103), a tank for hydrostatic systems (103);
• a system of filtration of liquids (107);
• a system of control of the temperature of liquids (109); and
• an electrical box (113), and
• mounting these peripherals in a subsystem,
**characterised by** the integration in the subsystem
• of a system of feed (111) of the material to be machined; and
• of all the electrical components necessary for functioning of the peripherals, except for the main control,
wherein the subsystem (101) is designed to be integrated in a multispindle lathe.

2. The method according to claim 1, wherein the method further comprises the individual verification of the functioning of the peripherals prior to integration of the subsystem (101) in the multispindle lathe.

3. The method according to any one of the preceding claims, wherein the method further comprises the interconnection of at least certain peripherals.

4. The method according to any one of the preceding claims, wherein the method further comprises the verification of the interoperability of the peripherals.

5. The method according to claim 4, wherein the verification of the interoperability of the peripherals is carried out before integration of the subsystem (101) in the multispindle lathe.

6. The method according to any one of the preceding claims, wherein the method comprises the insertion of an electrical feed of the subsystem (101) separate from the rest of the multispindle lathe and coupling of all or certain of the electrical peripherals to this electrical feed.

7. The method according to any one of the preceding claims, wherein the assembly comprises all the essential peripherals for the functioning of the multispindle lathe.

8. The method according to any one of the preceding claims, wherein the method further comprises the installation of a control unit (113) in the subsystem (101) to control the operation of at least certain peripherals.

9. A subsystem (101) for a multispindle lathe, the subsystem (101) comprising the following peripherals:
• at least one of the following tanks: a lubrication tank (103), a tank for high pressure (103), a tank for hydrostatic systems (103);
• a system for filtration of liquids (107);
• a system of control of the temperature of liquids (109); and
• an electrical box (113),
**characterised in that** the subsystem (101) further comprises a system of feed (111) of the material to be machined and all the electrical components necessary for the functioning of the peripherals, except for the main control, and wherein the subsystem (101) is designed to be integrated in a multispindle lathe.

10. The subsystem (101) according to claim 9, wherein the electrical box (113) is designed for controlling the interoperability of at least certain electrical peripherals of the subsystem (101).

11. The subsystem (101) according to any one of the claims 9 or 10, wherein the subsystem is designed to be transported as a unit independent of the multispindle lathe.

## Patentansprüche

1. Verfahren zur Gruppierung und Integration von Peripheriegeräten für eine Mehrspindel-Drehmaschine, das Verfahren umfassend
• die Beschaffung der folgenden Peripheriegeräte:
• mindestens eines der folgenden Behälter: eines Kühlmittelbehälters (103), eines Hochdruckbehälters (103), eines Behälters für hydrostatische Systeme (103);
• eines Systems zur Flüssigkeitsfiltrierung (107);
• eines Systems zur Regelung der Flüssigkeitstemperatur (109); und
• eines Elektrokastens (113), und
• die Montage dieser Peripheriegeräte in einem Subsystem,
**gekennzeichnet durch** die Integration in das Subsystem
• eines Versorgungssystems (111) für den zu bearbeitenden Rohstoff; und
• aller elektrischen Komponenten, bis auf die Hauptsteuerung, welche für den Betrieb der Peripheriegeräte notwendig sind,
bei welchem das Subsystem (101) eingerichtet ist, um in eine Mehrspindel-Drehmaschine integriert zu werden.

2. Das Verfahren nach Anspruch 1, bei welchem das Verfahren zudem die individuelle Überprüfung des Betriebs der Peripheriegeräte vor der Integration des Subsystems (101) in die Mehrspindel-Drehmaschine umfasst.

3. Das Verfahren nach einem der vorangehenden Ansprüche, bei welchem das Verfahren zudem die Zusammenschaltung von mindestens gewissen Peripheriegeräten umfasst.

4. Das Verfahren nach einem der vorangehenden Ansprüche, bei welchem das Verfahren zudem die Überprüfung der Zusammenarbeitsfähigkeit der Peripheriegeräte umfasst.

5. Das Verfahren nach Anspruch 4, bei welchem die Überprüfung der Zusammenarbeitsfähigkeit der Peripheriegeräte vor der Integration des Subsystems (101) in die Mehrspindel-Drehmaschine durchgeführt wird.

6. Das Verfahren nach einem der vorangehenden Ansprüche, bei welchem das Verfahren das Einführen einer vom Rest der Mehrspindel-Drehmaschine getrennten Stromversorgung für das Subsystem (101) und das Anschliessen von gewissen oder allen elektrischen Peripheriegeräten an diese Stromversorgung umfasst.

7. Das Verfahren nach einem der vorangehenden Ansprüche, bei welchem die Montage alle für den Betrieb der Mehrspindel-Drehmaschine wesentlichen Peripheriegeräte umfasst.

8. Das Verfahren nach einem der vorangehenden Ansprüche, bei welchem das Verfahren zudem die Installation einer Steuerungseinheit (113) im Subsystem (101) zur Steuerung des Betriebs von mindestens gewissen Peripheriegeräten umfasst.

9. Subsystem (101) für eine Mehrspindel-Drehmaschine, das Subsystem (101) umfassend die folgenden Peripheriegeräte:
• mindestens einen der folgenden Behälter: einen Kühlmittelbehälter (103), einen Hochdruckbehälter (103), einen Behälter für hydrostatische Systeme (103);
• ein System zur Flüssigkeitsfiltrierung (107);
• ein System zur Regelung der Flüssigkeitstemperatur (109); und
• einen Elektrokasten (113),
**dadurch gekennzeichnet, dass** das Subsystem (101) zudem ein Versorgungssystem (111) für den zu bearbeitenden Rohstoff und alle elektrischen Komponenten, bis auf die Hauptsteuerung, welche für den Betrieb der Peripheriegeräte notwendig sind, umfasst und bei welchem das Subsystem (101) eingerichtet ist, um in eine Mehrspindel-Drehmaschine integriert zu werden.

10. Das Subsystem (101) nach Anspruch 9, bei welchem der Elektrokasten (113) eingerichtet ist, um die Zusammenarbeitsfähigkeit mindestens gewisser elektrischer Peripheriegeräte im Subsystem (101) zu kontrollieren.

11. Das Subsystem (101) nach einem der Ansprüche 9 oder 10, bei welchem das Subsystem eingerichtet ist, um wie eine von der Mehrspindel-Drehmaschine unabhängige Einheit transportiert zu werden.
